# EUROPEAN PATENT APPLICATION

(11) **EP 0 534 537 A1**
(43) Date of publication of application: **31.03.1993**
(21) Application number: 92202849.3
(22) Date of filing: 17.09.1992
(51) Int. Cl.: F16C 25/06, F16C 35/06, F16C 19/52, F16C 19/54

(54) **Method for tightening an element fitted with screw thread to a specific pre-load**

(30) Priority: 19.09.1991 NL 9101579
(71) Applicant: S.K.F. INDUSTRIAL TRADING & DEVELOPMENT COMPANY B.V., Nieuwegein (NL)
(72) Inventor: Van Essen, Hilbertus, NL-3521 CT Utrecht (NL); De Vries, Alexander Jan, NL-4003 KA Tiel (NL)
(74) Representative: de Bruijn, Leendert C.

(57) **Abstract**

In a method for tightening an element fitted with screw thread to a specific pre-load, which screw thread is in engagement with the screw thread of a second threaded element an annular film (13) of a piezoelectric material is placed between at least one pair of the said contact surfaces. The annualr film (13) is provided with electrical connections (14, 15) that are connected with a measuring device (16), whereupon the said one threaded element (10) is tightened until the measuring device indicates a specific value which corresponds to the desired pre-load. According to said method, a rolling element bearing assembly may be pre-loaded axially. In this respect the washer (12) has a raised edge (12', 12'') along its inner and outer periphery so that between these edges the washer (12) has a recessed portion, and an annular film (13) of a piezoelectric material which is provided with electric connections (14, 15) is placed in this recessed portion.

## Description

The invention relates to a method for tightening an element fitted with screw thread to a specific pre-load, which screw thread is in engagement with the screw thread of a second threaded element, where one of these elements has an essentially annular contact surface that rests directly or indirectly against one side of a component or assembly the other side of which rests directly or indirectly against an essentially annular detent which is connected to or forms a unity with the second threaded element, so that when one of the said elements is tightened the two pairs of opposed contact surfaces, which are formed on one side by the annular contact surface and the said one side of the component and on the other side by the detent and the said other side of the component, are pressed together with a given pre-load.

A calibrated torque wrench, with which the said threaded element is tightened until the wrench indicates the particular torque exerted that corresponds to the desired pre-load, has hitherto been used to perform this method.

However, this known method is inaccurate as a result of variations in the coefficient of friction between the screw threads of the said elements and between the said pairs of contact surfaces. In addition, a special torque wrench is required for this method.

The object of the invention is to procure an improved method of the said type by which the desired pre-load can be obtained with greater accuracy, and which at the same time may be performed using an ordinary clamp wrench.

This object is accomplished in that, in the method according to the invention, between at least one pair of the said contact surfaces there is placed an annular film of a piezoelectric material which is provided with electrical connections that are connected with a measuring device, whereupon the said one threaded element is tightened until the measuring device indicates a specific value which corresponds to the desired pre-load.

The method may in particular be applied in advantageous fashion for imparting or establishing a specific axial pre-load in a rolling element bearing with two rows of rolling elements which are each accommodated between an inner and outer race, where one of the threaded elements is formed by a nut and the other threaded element by a shaft on which the inner races of the rolling element bearing are mounted and which, near one of its ends, is provided with a detent against which rests the inner race of the innermost row of rolling elements, and at its other end bears an externally threaded terminal part on which the nut is tightened against a washer which on its other side rests against the face of the inner race of the other row of rolling elements, where according to the invention the washer has a raised edge along its inner and outer periphery, so that it has a recessed portion between these edges and the annular film of a piezoelectric material is placed in this recessed portion.

On the washer and annular film of a piezoelectric material placed therein there is preferably mounted a second washer, of which the outer and inner diameters are approximately equal to the outer and inner diameters respectively of the said recessed portion of the first washer.

It is noted that a film of a piezoelectric material in the form of a rectangular strip and applications thereof are known per se. Such strips, however, are unsuitable for application in the method according to the present type, inasmuch as the unevenly distributed compressive force that occurs in the method would cause such strips or parts thereof to move and, due to this, measurement is unreliable.

The invention is explained below in detail with the aid of the drawing, wherein:
Figure 1 shows, in axial cross section, a roller bearing assembly that may be pre-loaded according to the method according to the invention, and
Figure 2 shows the annular film of a piezoelectric material in elevation.

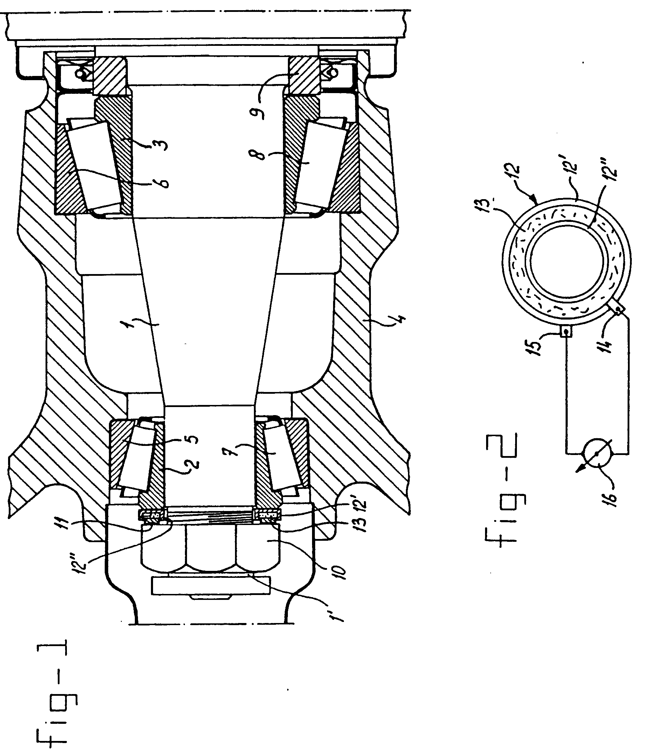

As shown in Figure 1, the roller bearing assembly comprises a shaft 1 on which are mounted two inner races 2, 3, placed at a distance apart, and a housing 4 wherein are mounted the associated outer races 5 or 6. Tapered rollers 7 and 8 are placed between the races 2 and 5 and the races 3 and 6 respectively. In addition, on the shaft 1 there is mounted a detent ring 9 against which the inner race 3 rests, while at its other end the shaft 1 is prolonged by a shaft stub 1' on which the nut 10 is screwed.

Between the nut 10 and the inner race 2 there is placed an assembly consisting of two washers 11 and 12 and an annular film 13 of a piezoelectric material located between them. As shown in Figure 2, the washer 12 has raised edges 12' and 12'' along its outer and inner periphery respectively, so that a recessed portion is formed wherein the annular film 13 of piezoelectric material is paced. In addition, the said assembly is provided with electrical connections 14 and 15 which are connected with a measuring device 16 of known type.

In applying the method according to the invention the nut 10 is tightened until the measuring instrument 16 indicates a specific value which corresponds to the desired pre-load of the roller bearing assembly.

## Claims

1. Method for tightening an element fitted with screw thread to a specific pre-load, which screw thread is in engagement with the screw thread of a second threaded element, where one of these elements has an essentially annular contact surface that rests directly or indirectly against one side of a component or assembly the other side of which rests directly or indirectly against an essentially annular detent which is connected to or forms a unity with the second threaded element, so that when one of the said elements is tightened the two pairs of opposing contact surfaces, which are formed on one side by the annular contact surface and the said one side of the component and on the other side by the detent and the said other side of the component, are pressed together with a specific pre-load, characterized in that between at least one pair of the said contact surfaces there is placed an annular film (13) of a piezoelectric material which is provided with electrical connections (14, 15) that are connected with a measuring device (16), whereupon the said one threaded element (10) is tightened until the measuring device indicates a specific value which corresponds to the desired pre-load.

2. Method according to claim 1 adopted for imparting or establishing a specific axial pre-load in a rolling element bearing with two rows of rolling elements which are each accommodated between an inner and outer race, where one of the threaded elements is formed by a nut and the other threaded element is formed by a shaft on which the inner races of the rolling element bearing are mounted and which near one of its ends is provided with a detent against which rests the inner race of the innermost row of rolling elements and at its other end bears an externally threaded terminal part on which the nut is tightened against a washer which on its other side rests against the face of the inner race of the other row of rolling elements, characterized in that the washer (12) has a raised edge (12', 12'') along its inner and outer periphery, so that between these edges the washer has a recessed portion and the annular film (13) of a piezoelectric material is placed in this recessed portion.

3. Method according to claim 2, characterized in that on the washer (12) and the annular film (13) of a piezoelectric material placed therein there is mounted a second washer (11) of which the outer and inner diameters are approximately equal to the outer and inner diameters respectively of the said recessed portion of the first washer.

4. Method according to claim 3, characterized in that the two washers (11, 12) and the film (13) of a piezoelectric material placed between them are joined into a unity.

5. Rolling element bearing assembly that may be pre-loaded axially, comprising a shaft on which are mounted two inner races placed at a distance apart and a housing in which the two associated outer race are mounted, where between each inner race and the associated outer race there is placed a row of rolling elements and the shaft has a detent against which the inner race of the innermost row of rolling elements rests and a threaded shaft stub, projecting outward past the other inner race, on which is screwed a nut which, via at least one washer, rests against the said other inner race, characterized in that the washer (12) has a raised edge (12', 12'') along its inner and outer periphery so that between these edges the washer (12) has a recessed portion, and an annular film (13) of a piezoelectric material which is provided with electric connections (14, 15) is placed in this recessed portion.

6. Rolling element bearing assembly according to claim 5, characterized in that on the washer (12) and annular film (13) of a piezoelectric material placed therein there is mounted a second washer (11), of which the outer and inner diameters are approximately equal to the outer and inner diameters respectively of the said recessed portion of the first washer.

7. Rolling element bearing assembly according to claim 6, characterized in that the two washers (11, 12) and the film (13) of a piezoelectric material placed between them are joined into one whole.

8. Rolling element bearing according to one of the claims 5-7, characterized in that the rolling elements are tapered rollers.
